# EUROPEAN PATENT APPLICATION

(11) **EP 2 371 320 A1**
(43) Date of publication of application: **05.10.2011**
(21) Application number: 10425099.8
(22) Date of filing: 30.03.2010
(51) Int. Cl.: A61C 11/02, A61C 11/06, A61C 11/08

(54) **Surgical programmer suitable for analizing and programming surgical operations on skull bones, particularly for operations of maxillo-facial, orthognathic, implantar and reconstruction surgery**

(71) Applicant: Ikon@ s.r.l., 20052 Monza (MB) (IT)
(72) Inventor: Busato, Antonio, 20125 Milano (IT)
(74) Representative: Ferraiolo, Ruggero

(57) **Abstract**

A surgical programmer (1) wherein an equipped arm (2) holding the model of a jaw (14) is articulated so as to rotate around its longitudinal longer axis (Y-Y) and around a transverse axis (X-X) so as to make angular shifts upward and downward; an equipped base (3) and a column 9 thereof carry means for controlling the positions of the model of a mandible (14a); an extensible vertical rod (21) supports the equipped arm (2); an articulator element (4) holds the model of the mandible (14a) so as to impart to it basically all the movements it can perform with respect to its jaw (14) and to execute micrometric measurements referred to angular shifts or to extensions of the mandible (14a) - (Fig. 4).

## Description

### Field of the invention

The field of the invention is the one of various instruments suitable for planning operations of maxillofacial surgery, orthognathic surgery, implant surgery, oral surgery, regenerative surgery for oral tissues, plastic surgery, gnathology and onhodontics.

### State of the art

In the field of orthognathic or maxillofacial surgery, operations are currently planned on chalk models of dental arches attached to common articulators, or on stereolitographic models by means of suitable softwares.

In the case of operations involving repositioning of the upper jaw (in the following simply referred to as jaw) or of the mandible, once skeletal fragments have been mobilized (i.e. face parts are cut and then re-oriented into the new desired position), the operator tries to correctly position the two above-mentioned elements by means of bites or plates modeled short before surgery. Basically, there is at present no suitable simulator/programmer suitable both for precisely planning surgery as specified in the title of the present description, and manufacturing instruments for executing the surgical operations according to a plan with foreseeable results. Moreover, there is no instrument enabling to evaluate in advance the aesthetic and functional effects of the surgery in relation to the specific and individual skeletal characteristics of the patient.

### Drawbacks of the state of the art

The main drawback of surgery making use of a software consists in that, as far as the analytical and planning aspects of the operation are concerned, it is impossible to establish a functional relation between the skeletal bones of the face and to establish a relation between the specific morphological and functional characteristics of the patient with the performed therapy (relation between position and orientation of the implants and of the osteotomized skeletal segment with the articular characteristics), whereas from the point of view of execution, the main drawback of operations involving jaw or mandible repositioning consists in that the operator cannot control in any way some basic parameters such as e.g. the patient's face vertical size or the position of the mobilized segment in relation to the position of future or immediate dental prostheses.

### General disclosure of the invention and advantages thereof

A general disclosure of the invention includes the functions and advantages of the surgical programmer (in the following simply referred to as programmer) suitable for establishing a functional relation between the stereolitographic models obtained by CATs executed on the skull of a patient to be subjected to surgery. In order to establish a functional relation between the three-dimensional models, which will be referred to in the following as 3D models, by means of this programmer, no standard or individual facial arches or other aids are required since said aim is achieved according to an infinite number of reference planes (orbital plane axis, Frankfurt plane, etc.) starting from a file from which 3D models of face, jaw and mandible skeletal parts are obtained, so as to correctly amulate the movements of the mandible with respect to the jaw. The programmer is suitable for a multitude of aims and operations, which are summarized below:
- replicating functions and movements of a mandible as if anatomic parts of the patient's skeleton were used; the programmer is an articulated tool taking into account the geometrical parameters of a specific patient since it uses the three-dimensional model of the patient's articulations to replicate his/her movements (individual value articulator),
- analyzing the relations between articulations and teeth and analyzing the positions of condyles and articular surfaces (Axiograph and Mandibular Position Indicator),
- exactly simulating maxillofacial and orthognathic surgery and prepare instruments (osteotomy and drilling templates, orientation grids, etc.) for carrying out these interventions exactly as programmed (Mandibular Position Variator),
- carrying out braces for tissue regeneration so that the parts built are morphologically suitable for the functions to be implemented;
- executing pre- and post-surgery cephalometric analyses and then evaluating the after-effects of the maxillofacial and orthognathic surgery;
- carrying out templates for implant surgery;
- establishing a correct relation between parts making up the face skeleton eliminating mounting errors due to the use of facial arches;
- simulating surgical operations and exactly measuring the shifts which the surgeon will make to skeleton segments;
- helping to carry out conventional accessories guiding the surgeon during operations, thus eliminating errors and reducing the duration of surgery;
- helping to carry out surgical-implant templates without the surgeon having or using a PC and using expensive softwares; 3D models and CAT printed plates are enough for operating with the programmer;
- avoiding errors in the selection of the correct position of mandible condyles, since it uses an exact copy of the patient's articulations,
- analyzing the patient's occlusion (occlusion plane, compensation curves, dental cords, etc.) with respect to correct cranial and articular references,
- carrying out diagnostic waxing and orthodontic setups in relation to the specific skeletal and functional characteristics of the patient.

### Detailed description of the invention

The invention will now be described in detail as a whole and in its various parts by means of an execution example and schematic drawings assuming the programmer is on a horizontal plane (a table and the like).The terms "jaw" and "mandible" refer to the three-dimensional jaw model and to the three-dimensional mandible model, respectively. In the drawings
- Fig. 1 is a first perspective view of the programmer,
- Figure 2 is a first lateral view of the programmer,
- Fig. 3 is a second lateral view of the programmer with a jaw positioned therein,
- Fig. 4 is a third lateral view of the programmer with a mandible and its jaw positioned open,
- Fig. 5 is a fourth lateral view of the programmer with a mandible and its jaw positioned closed and resting on a lower mobile support,
- Fig. 6 is a fifth lateral view of the programmer after positioning the jaw and the mandible shifted forward so as to check the angular articular movement,
- Fig. 7 is a sixth lateral view of the programmer with a mandible and its jaw positioned tilted upwards so as to enable the various measurements of the mandible shifts,
- Fig. 8 is a plan view of an articulator element holding a mandible for emphasizing the horizontal and unilateral angular shift thereof in order to measure its horizontal shift,
- Fig. 9 is a perspective view of the articulator element showing all the possible travels, adjustments and simulations to be carried out for the micrometric readings of the anatomical mandible shifts, and
- Fig. 10 is a plan view, partially sectioned in its lower portion, of an equipped base of the programmer.

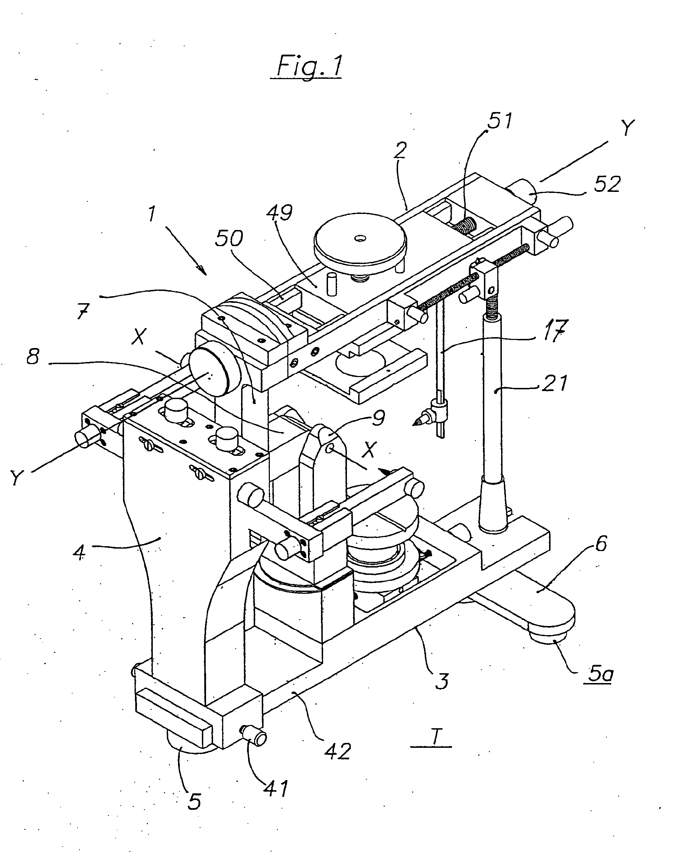

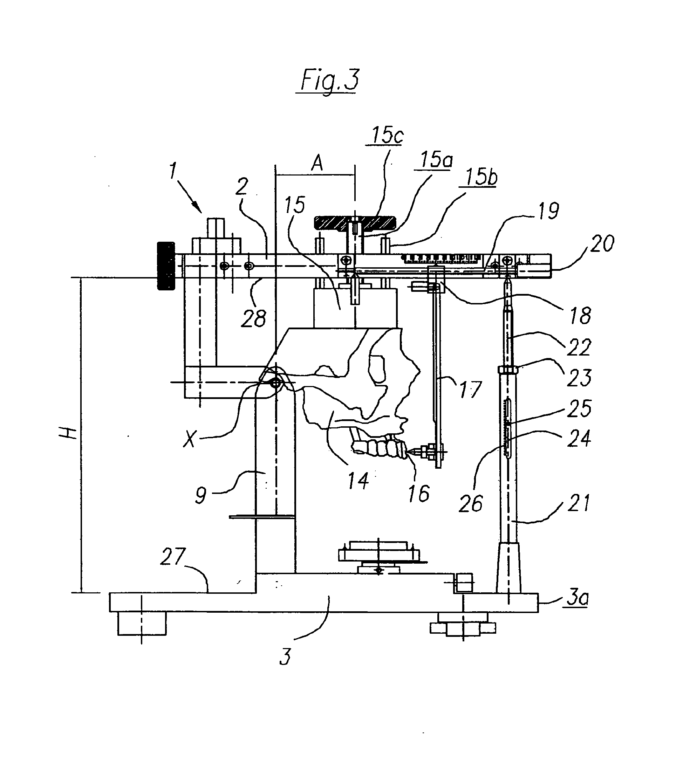

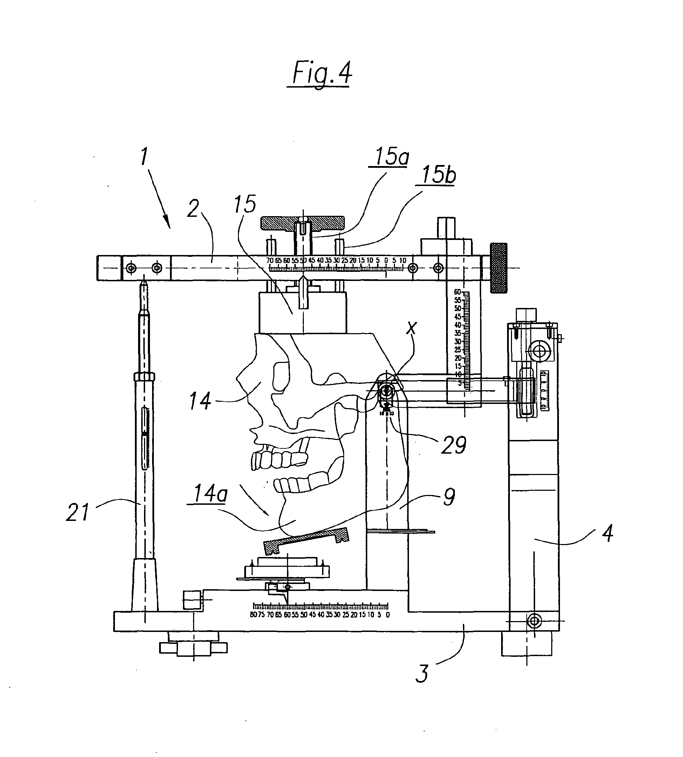

Fig. 1 shows the programmer 1 including two basic parts, referred to as equipped arm 2 and equipped base 3, respectively (these two parts will be referred to together in the following as "base structure"), an extensible vertical bar 21, placed adjacent to the distal ends of the equipped arm 2 and of the equipped base 3, which supports the equipped arm 2 and performs other functions disclosed in the following, and an articulator element 4 suitable for holding a mandible not shown in Fig. 1 (see Fig. 4). The articulator element 4 is suitable for imparting to the mandible basically all the movements which it can perform with respect to the related jaw. The equipped base 3 rests on a horizontal operating plane T by means of a rear foot 5 and two front feet 5a (one only is visible) placed on the ends of a rotating element 6 located under the equipped base 3. The equipped arm 2 carries on its proximal end a lower vertical extension 7 which carries in its turn a horizontal shelf 8 articulated around a horizontal transverse axis X-X lying in a plane parallel to the longitudinal longer axis Y-Y of said arm 2, the distance between the two axes being an aim-specific distance, as will be evident in the following description and in the drawings. The shelf 8 is articulated on a column 9 rising vertically from the equipped base 3. The element referred to with the numeral 17 is a rod which will be shown in Fig. 3. The functions which the equipped arm 2 can perform are one of more of the following, in the sequence and number selected by the operator according to his/her plan:
- mounting a 3D model of the jaw which can be rotated together with the equipped arm 2 around axis X-X (see Fig. 4); for this kind of mounting no transfer facial arches are required in the three spatial planes.
- mounting a 3D model of the jaw which can be tilted together with the equipped arm 2 around axis X-X according to infinite mounting planes (known Frankfurt planes, etc.).
- mounting a 3D model of the jaw which can be rotated together with the equipped arm 2 around axis X-X according to individual patient's parameters
- simulating orthognathic or maxillofacial surgery effects by shifting in space 3D models of the jaw and/or mandible.

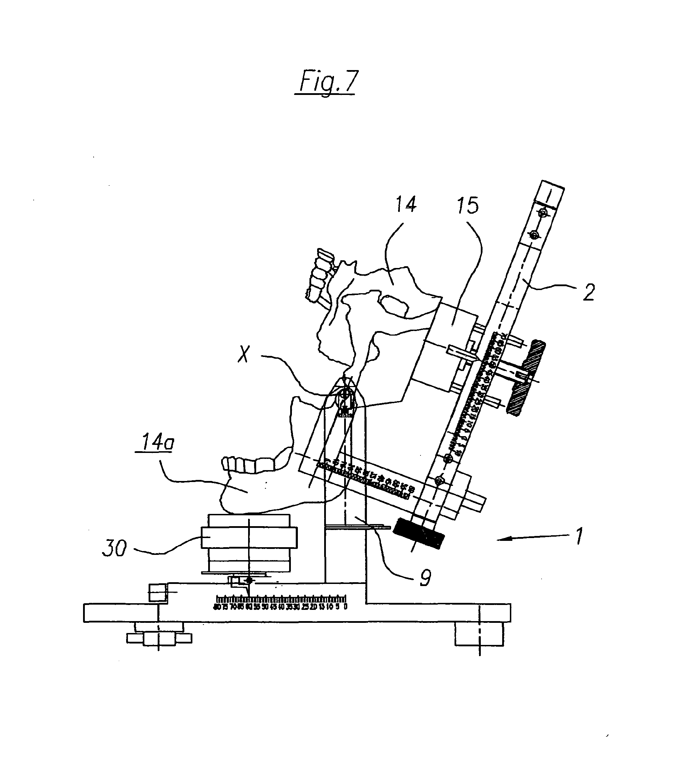

In order to meet these needs, the equipped arm 2 is provided with suitable means for rotating it around its longitudinal longer arm (Y-Y) and tilting it around the transverse axis (X-X) so as to make it shift angularly upwards and downwards (as shown by way of example in Fig. 7).

The equipped base 3 comprises means for mounting and articulating the 3D model of the mandible, which can be shifted forward and backward, rotated and shifted laterally. By shifting forward these means the mandible condyle can slide on the articular prominence, thus causing the rotation of the equipped arm 2. This enables to read on a suitable micrometric scale the inclination of the articular prominence with respect to the reference plane and to correctly mount the 3D model of the mandible in its exact relation with the articular cavities of the 3D model of the jaw.

Moreover, the functions of the equipped base 3 are the following:
- making the mandible shift forward and backward,
- making the mandible shift in a plane parallel to the plane containing the axis of the rotation hinge between condyle and articular prominence,
- making the mandible rotate in the plane containing the rotation hinge axis,
- determining the inclination of the articular prominence,
- analyzing the positions of condyles,
- determining the paths made in the passage from one to the other condyle position,
- simulating the shifts made by the mandible after maxillofacial or orthognatodontic surgery.

The use of impression material enables to obtain the 3D model of the articular space and analyze condyle position in the articular cavity.

The position occupied by the condyle in middle position and the one occupied in position of maximum intercuspidation can be indicated by means of a flag. This enables to use the tool as a conventional MPI (Mandibular Position Indicator). The equipped arm 2 contains a sliding part 49 which supports as a whole the jaw and is suitable for travelling along the guides 50 by actuating a threaded bar 51 by means of the handle 52.

In general the movements which can be performed by the equipped base 3 enable to simulate the shifts which the mandible can be subjected to during maxillofacial or orthognathic surgery.

Eventually, the programmer as a whole can be used for carrying out 3D cephalometric plots executed directly on 3D models of the face skeleton.

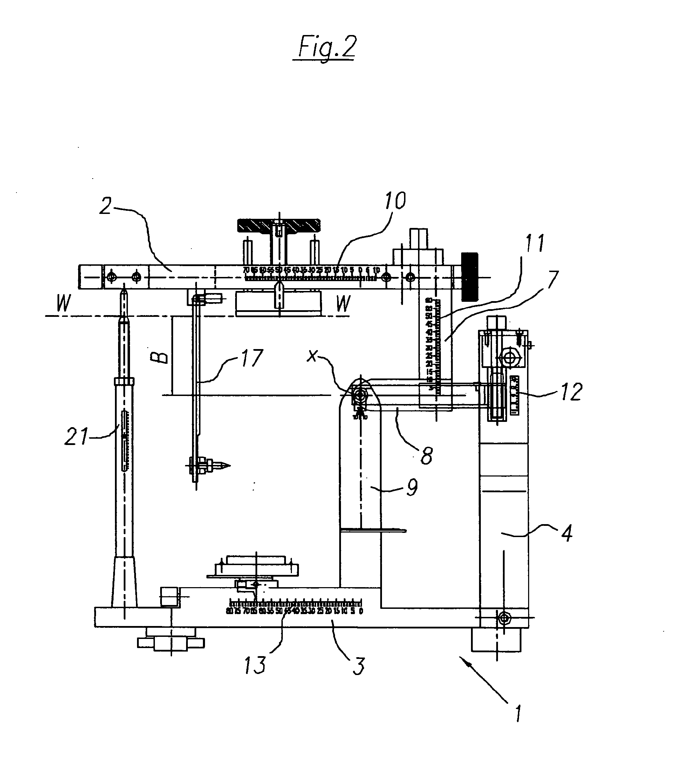

Fig. 2 shows as a whole the programmer 1 comprising the equipped arm 2, the articulator element 4 and an extensible vertical bar 21; a micrometric scale 10 located in the equipped arm 2 is suitable for detecting the horizontal distance A of the jaw with respect to the articulation axis X-X as detected by the three-dimensional CAT made in a preliminary step on the patient's skull. In the same step of dimensional checks on the jaw skeleton, size B between axis X-X and the resting plane WW, corresponding to the horizontal planar milling parallel to the orbital plane, obtained on the three-dimensional model of the jaw which will be mounted onto the programmer, is further detected by means of the vertical micrometric scale 11 on the vertical extension 7. This orbital plane, as is well known in the field of maxillofacial reconstruction, is defined by the two points defining the horizontal line getting through the hinge pivot between the jaw 14 and the mandible 14a (represented in the following figures) and the lowest point of the lower orbital edge, obtained for each individual patient in the three-dimensional anatomical detection. A further dimensional reference can be detected on the micrometric scale 12 located on the articulator element 4, which enables to read the vertical shift which the mandible must perform for the correct positioning thereof on the articulation axis X-X. Another dimensional reading can be obtained with the micrometric scale 13, placed laterally on the equipped base 3, which enables to read exactly the travel which the mandible must make to be horizontally released from the jaw, i.e. the shift which the patient can physiologically perform by shifting the mandible forward. The figure also shows a bar 17 whose functions are described in Fig. 3.

Fig. 3 shows a jaw 14 mounted in the programmer 1 and supported above by means of supporting blocks 15 mounted on one side with plastic adhesives or the like onto the previously mentioned planar milled part of the jaw, and on the other side by means of suitably sized magnetized elements, mounted onto a threaded element 15a which can be rotated by means of the flywheel 15c in middle position with respect to the width of the blocks 15, as adjusting element for the position of the jaw 14, with vertical cylindrical bars 15b as guides. Said jaw 14 is placed at distance A read with a checking element 16 mounted onto a bar 17 supported by the block 18 associated to the equipped arm 2 and suitable for performing a horizontal shift by means of a threaded bar 19 which can be manually actuated through the handle 20. This distance A is detected anatomically with a three-dimensional CAT on the patient's skull and corresponds to the distance between the articulation axis X-X and the outer portion of the first incisor tooth of the jaw arch. On the front part 3a of the equipped base 3 is further placed the extensible vertical bar 21 comprising a telescopic threaded portion 22 which can be taken out to a longer or shorter extent of the main body by rotating the threaded element 23 which by means of slot 24 and index 25 enables to read on the micrometric scale 26 the height H between the plane 27 of the equipped base 3 and the plane 28 of the articulator element 4, and enables to read the shift which will be performed by the jaw when the mandible is shift forward horizontally, as better shown in Fig. 7.

Fig. 4 shows that after applying the two 3D models of the jaw 14 and of the mandible 14a with the articulator element 4, it is possible to simulate the opening movement of the mandible with the simultaneous angular reading of said movement by means of the micrometric scale 29 placed on axis X-X of the vertical extension 9.

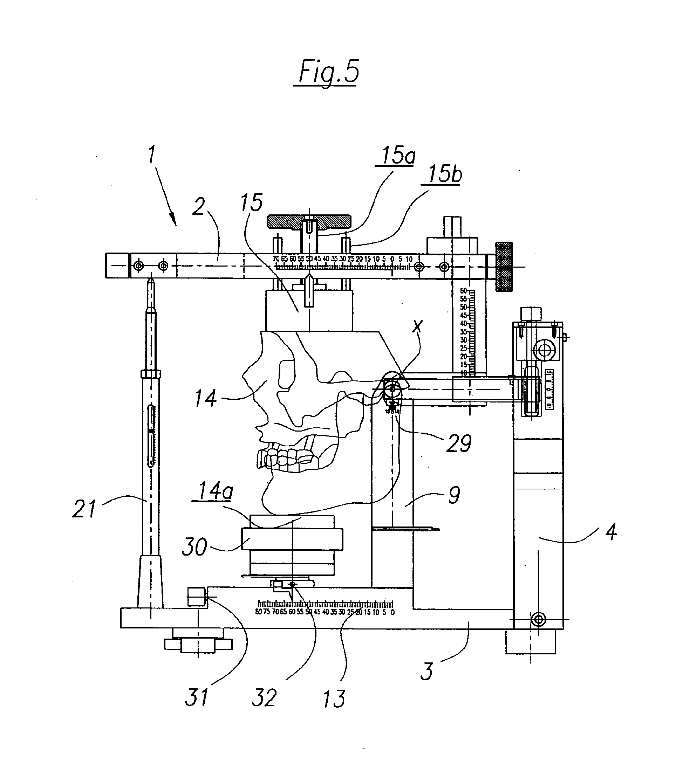

Fig. 5 shows that after mounting the two 3D models 14 and 14a, in the lower portion of the programmer 1 magnetic supporting elements 30 can be mounted which are height-adjustable as to let the lower plane of the jaw rest in closed position with respect to the mandible, in order to obtain a sliding plane for said mandible. The magnetic support can be horizontally shifted by means of a threaded bar 31 and orthogonally shifted by means of the threaded bar 32, thus enabling a micrometric reading of the shifts by way of the micrometric scale 13 mentioned above.

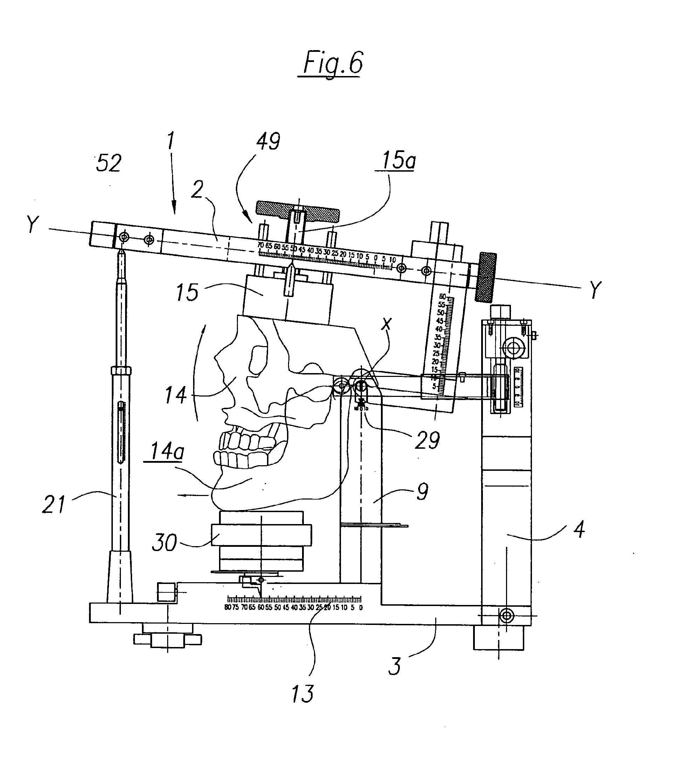

Fig. 6 shows the programmer 1 on which are mounted a jaw 14 and a mandible 14a. The equipped arm 2 is provided with a mechanism 49 suitable for receiving a 3D model of the jaw, which enables by means of an adjusting screw (movement up-down and vice versa) to let the position of planes crossing points of the 3D models coincide with the plane defined by the two points on the transverse axis X-X and a front point at the same distance from the lower surface of the equipped arm 2. This enables to correctly position the 3D model on the cranio-caudal plane. The aforesaid mechanism 49 enables to adjust the position of the 3D model of the jaw on the mid-sagittal plane (front-rear movement and vice versa). This means that, though without the help of a transfer facial arch, it will be possible to position the 3D model at the exact distance with respect to the terminal rotation axis X-X. This distance is obtained by measurements made on the patient's CAT. This means that the 3D model can be mounted according to individual values specific for each patient. Since the upper plane of the 3D model can be carried out according to infinite planes, it can be mounted according to several reference plane (axis-orbital plane, Frankfurt plane). Therefore, the equipped base 3 is a tool that enables to correctly mount the 3D model of the mandible 14a in an exact relation with the articular cavities of the 3D model of the jaw 14 and an operator to perform the following operations:
- making the mandible shift forward and backward,
- making the mandible shift in a plane parallel to the plane containing the rotation hinge axis,
- making the mandible rotate in the plane containing the rotation hinge axis,
- determining the inclination of the articular prominence,
- analyzing the positions of condyles,
- determining the paths made in the passage from one to the other condyle position,
- simulating the shifts made by the mandible in consequence of maxillofacial or orthognatodontic surgery.

Fig. 7 shows the programmer 1 with the equipped base 2 tilted; the 3D model of the jaw 14 is held still by means of the magnetic elements 15 and the 3D model of the mandible 14a is held still by means of the magnetic elements 30. This tilting of the equipped base 2 is particularly suitable for performing some anatomical measurements on mandible models and, if required, for carrying out casts and implant components.

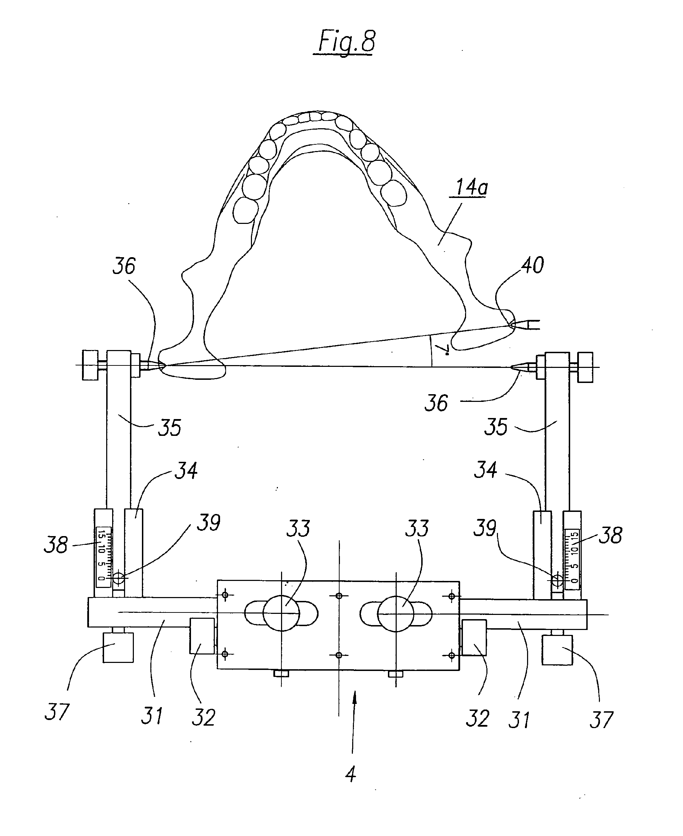

In fig. 8 are emphasized the characteristics of the adjustments and measurements that can be performed on the model of the mandible 14a with the articulator element 4. In particular, the articulator element 4 is provided with two opposite arms 31 that can be extended horizontally by means of the threaded adjusting elements 32 and vertically by means of the threaded elements 33. The two horizontal arms 31 support in their turn the guides 34 housing the two orthogonal arms 35 provided on their ends with threaded elements 36 with a conical end, suitable for getting into the seats of the articulation axis 40 obtained on the sides of the 3D model of the mandible 14a. The extension Z of the two arms can be adjusted by means of the threaded elements 37 so as to simulate the horizontal and parallel shift of the mandible and also the angular shift on every single side, in order to be released from the condyles of the jaw. These lateral shifts can be detected on the micrometric scales 38 and the reference 39.

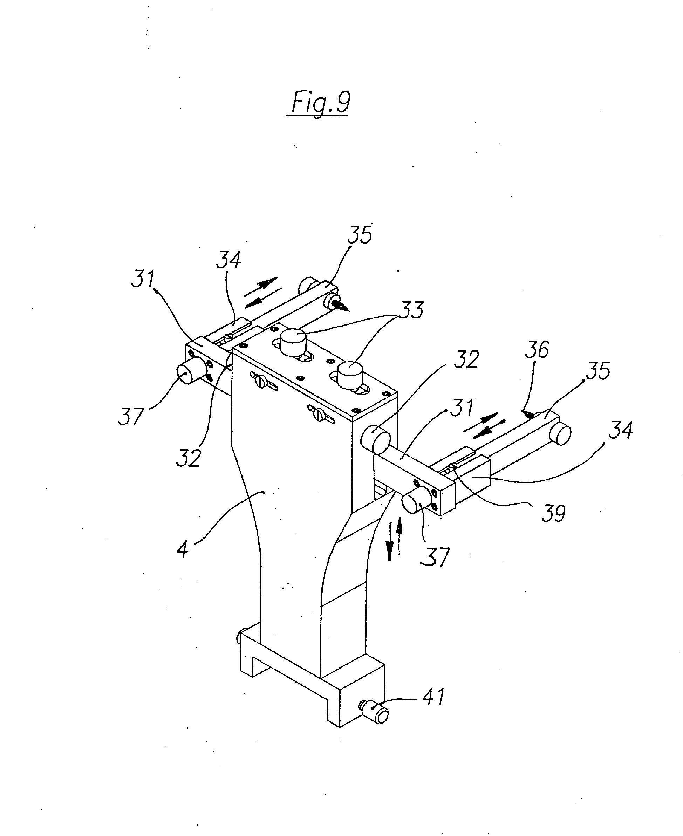

Fig. 9 shows all the shifts and the adjustments that can be applied to the 3D model of the mandible 14a with the adjustment means of the articulator element 4, similarly to the description of Fig. 8. As is evident, the articulator element 4 is used only when it is necessary to perform micrometric measurements of angular shifts or extension of the 3D model of the mandible 14a. The articulator 4 is thus applied onto the rear portion of the equipped base 3 and fastened thereto by means of the threaded elements 41 acting upon the two vertical sides 42 of the articulator base.

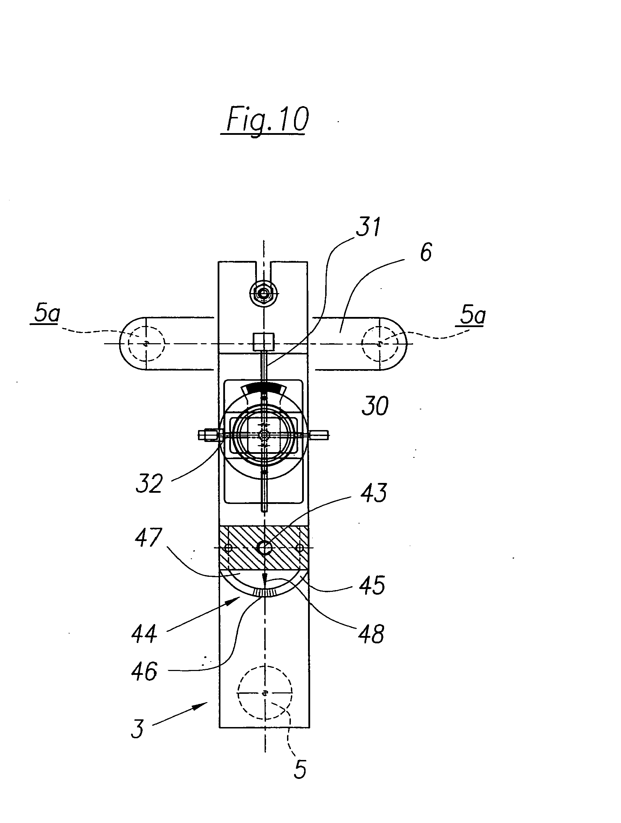

Fig. 10 shows how the equipped arm 2 is coupled to the equipped base 3 by means of a threaded element 43 (not visible in other figures) with two planar elements 44 therebetween, a lower element 45 having a micrometric scale 46 and an upper one 47, which is smaller and contains the reading index of the horizontal angular shift. This adjustment will be essential if the jaw, or its 3D model, mounted onto the upper support of the programmer, requires an angular axial correction with respect to the mandible, or to its 3D model.

## Claims

1. Surgical programmer (1) suitable for analyzing and planning surgical operations onto skull bones, in particular for maxillofacial, orthognathic, implant and reconstructive surgery, **characterized in that** it comprises
- an equipped arm (2) provided with means suitable for making it rotate around a longitudinal longer axis (Y-Y) thereof and making it rotate around a transverse axis (X-X) lying in a plane parallel to said longitudinal longer axis (Y-Y) so as to make it shift angularly upward and downward;
- an equipped base (3) for laying the programmer onto an operating plane (T) and to carry means for controlling positions of the 3D model of a jaw (14);
- an extensible vertical bar (21) placed adjacent to the distal ends of the equipped arm (2) and of the equipped base (3), suitable for supporting the equipped arm (2) and carrying a micrometric scale (26) for reading the height (H) between the plane (27) of the equipped base (3) and the plane (28) of the articulator element (4) and enabling to read the extension of the 3D model of the jaw (14) during the horizontal forward shift of the 3D model of the mandible (14a);
- an articulator element (4) suitable for holding a 3D model of a mandible (14a) so as to impart to it basically all the movements it can perform with respect to the 3D model of the related jaw (14),
the equipped arm (2) carrying on its proximal end a lower vertical extension (7) carrying in its turn a horizontal shelf (8) articulated onto the transverse axis (X-X), the horizontal shelf (8) being articulated onto a column (9) rising vertically from the equipped base (3), all these parts together being suitable for performing at least one of the following functions, in the sequence selected by the operator:
i) mounting a 3D model of the jaw which can be rotated together with the equipped arm (2) around transverse axis X-X according to infinite mounting planes;
ii) mounting a 3D model of the jaw which can be rotated together with the equipped arm 2 around transverse axis X-X according to individual patient's parameters;
iii) simulating orthognathic or maxillofacial surgery effects by shifting in space 3D models of the jaw (14) and/or mandible (14a).

2. Surgical programmer (1) according to claim 1, **characterized in that** the equipped arm (2) comprises:
- a means (10) with adjustment screw (11) suitable for holding a 3D model of the jaw (14a) and enabling to make the position of planes crossing points of said 3D model coincide with the plane defined by two points lying on the transverse axis (X-X) and a front point at the same distance from the lower surface of the equipped arm (2) so as to position said 3D model on the cranio-caudal plane;
- adjustment means (15) suitable for making the equipped arm (2) rotate around the transverse and longitudinal axis (X-X, Y-Y).

3. Surgical programmer according to claims 1, 2, **characterized in that** the equipped arm (2) comprises micrometric scales (12) suitable for measuring all the required shifts made by a jaw for orthognathic and maxillofacial surgery.

4. Surgical programmer (1) according to claim 1, **characterized in that** it comprises means (16, 17) moving horizontally and suitable for measuring the distance (A) between the articulation axis (X-X) and the outer portion of the first incisor tooth of the jaw arch.

5. Surgical programmer (1) according to claim 1, **characterized in that** the equipped base (3) comprises means (8, 9, 4) suitable for making the condyle of the 3D model of the mandible (14a) slide on the articular prominence thus causing the rotation of the equipped arm (2), to mount the 3D model of the mandible (14a) in the exact relation with the articulations cavities of the 3D model of the jaw (14), to enable the reading on a suitable micrometric scale of the inclination of the articular prominence with respect to the reference plane and to correctly mount the 3D model of the mandible (14a) in the exact relation with the articular cavities of the 3D model of the jaw (14), as a whole to enable the operator to perform the following operations:
- making the mandible shift forward and backward,
- making the mandible shift in a plane parallel to the plane containing the rotation hinge axis,
- making the mandible rotate in the plane containing the rotation hinge axis,
- determining the inclination of the articular prominence,
- analyzing the positions of condyles,
- determining the paths made in the passage from one to the other condyle position,
- simulating the shifts made by the mandible in consequence of maxillofacial or orthognatodontic surgery.

6. Surgical programmer (1) according to claim 1, **characterized in that** it comprises a bar (21) provided with a telescopic threaded portion (22) which can be extended by rotating a threaded element 23 which by means of a slot (24) and an index (25) enables to read on a micrometric scale (26) the height H between a plane (27) of the equipped base (3) and the plane (28) of the articulator element (4) and enables to read the extension that will be made by the 3D model of the jaw (14) during the horizontal forward shift of the mandible.

7. Surgical programmer (1) according to claim 1, **characterized in that** the articulator element (4) comprises two opposite arms (31) that can be extended horizontally by means of first threaded adjusting elements (32) and vertically by means of second threaded elements (33), the opposite arms (31) supporting guides (34) housing two orthogonal arms (35) provided on their ends with threaded elements (36) with a conical end, suitable for getting into the seats of the articulation axis obtained on the sides of the 3D model of the mandible (14a), the extension (Z) of the two arms being able to be adjusted by means of threaded elements (37) so as to simulate the horizontal and parallel shift of the mandible (14a) and also the angular shift on every single side, in order to be released from the condyles of the jaw, these lateral shifts being able to be detected on the micrometric scales (38) and the reference (39).
